# FASCICULE DE BREVET EUROPEEN

(11) **EP 3 046 368 B1**
(45) Date de publication et mention de la délivrance du brevet: **22.11.2017**
(21) Numéro de dépôt: 16151687.7
(22) Date de dépôt: 18.01.2016
(51) Int. Cl.: H04W 40/02, H04W 28/02, H04L 12/721, H04W 40/20, H04W 40/30, H04W 84/18

(54) **PROCEDE DE COLLECTE D'INFORMATIONS DE ROUTAGE DANS UN RESEAU AD-HOC ET PROCEDE DE SELECTION DE ROUTE A PARTIR DES INFORMATIONS COLLECTEES**
VERFAHREN ZUR ERFASSUNG VON LEITWEGDATEN IN EINEM AD-HOC-NETZ, UND AUSWAHLVERFAHREN DES LEITWEGS AUF DER BASIS DER ERFASSTEN INFORMATIONEN
METHOD FOR COLLECTING INFORMATION FOR ROUTING IN AN AD-HOC NETWORK AND METHOD FOR SELECTING A ROUTE FROM THE COLLECTED INFORMATION

(30) Priorité: 16.01.2015 FR 1500090
(43) Date de publication de la demande: 20.07.2016
(73) Titulaire: THALES, 92400 Courbevoie (FR)
(72) Inventeur: BOURDELLES, Michel, Gennevilliers Cedex (FR); GAILLIARD, Grégory, 92622 Gennevilliers Cedex (FR)
(74) Mandataire: HAMMES, Pierre

(56) Documents cités:
- FR-A1- 2 954 028
- FR-A1- 2 973 981
- US-A1- 2014 269 691
- KANO S ET AL: "Route switching protocol for network coding in ad hoc networks", COMMUNICATIONS AND ELECTRONICS (ICCE), 2010 THIRD INTERNATIONAL CONFERENCE ON, IEEE, PISCATAWAY, NJ, USA, 11 août 2010 (2010-08-11), pages 55-60, XP031932250, DOI: 10.1109/ICCE.2010.5670681 ISBN: 978-1-4244-7055-6

## Description

L'invention concerne le domaine des réseaux ad-hoc maillés comportant plusieurs noeuds mobiles pouvant communiquer entre eux via une ou plusieurs technologies d'accès radio. Plus précisément, l'invention vise le domaine de l'établissement de routes, pour la communication entre plusieurs noeuds distants au sein du réseau ad-hoc, de façon dynamique et de manière à prendre en compte les contraintes globales du réseau, en particulier l'existence de plusieurs flux de communication simultanés au sein du réseau.

L'établissement de routes optimales au sein d'un réseau ad-hoc complexe est un problème courant dans le cadre de la problématique générale du routage dans ce type de réseaux.

Le choix d'une route entre un noeud initial et plusieurs noeuds terminaux permettant le relai des données entre le noeud initial et les noeuds terminaux doit prendre en compte les caractéristiques du réseau et peut aboutir à des solutions différentes en fonction de l'objectif recherché. Cet objectif peut être d'éviter les contentions entre différents flux simultanés au sein du réseau ou d'assurer une robustesse de transmission par la duplication de certains flux ou encore de détecter et prendre en compte des situations de transmission simultanées de plusieurs flux pour réaliser une optimisation par combinaison de flux (par exemple par un mécanisme de codage réseau), ou par prise en compte de contraintes de chacun des flux à établir telles que la latence de bout en bout de transmission des paquets de données ou le débit des flux de données. D'autres objectifs peuvent encore être considérés tels que la prise en compte de capacités d'accès radio multiples pour certains noeuds ou d'une prise en compte de la capacité des liens du réseau et des besoins et criticités de certains flux.

Ainsi, il existe un besoin pour une méthode de sélection de route optimale au sein d'un réseau ad-hoc qui puisse être paramétrée en fonction de l'objectif recherché.

On connait les méthodes de sélection de route basées sur les protocoles OLSR (Optimized Link State Routing), OLSRv2, AODV (Ad-hoc On demand Distance Vector) ou AODVv2. Ces méthodes connues ne permettent pas d'établir des routes pour un flux donné au sein d'un réseau ad-hoc en prenant en compte d'autres flux établis dans la topologie du réseau. Ces méthodes ne permettent pas non plus d'identifier les capacités d'optimisation liées aux topologies identifiées lors de l'établissement de lien de différents flux.

On connait par ailleurs le document [1] qui propose une solution visant à identifier des routes alternatives en modifiant l'algorithme de routage AODV afin d'identifier des capacités de routage multi-chemins pour un flux particulier et appliquer des optimisations de type codage réseau sur les informations récoltées sur des noeuds intermédiaires.

On connait également les travaux concernant les méthodes d'optimisation inter-flux par codage réseau ([2], [3], [4], [5]) qui sont appliquées à des noeuds locaux intermédiaires dans un flux.

On connait enfin la demande de brevet français du Demandeur publiée sous le numéro FR2973981 qui décrit un procédé pour optimiser les capacités d'un réseau ad-hoc.

La présente invention propose une solution alternative aux solutions connues qui permet de prendre en compte l'existence de flux de communications établis au sein d'un réseau ad-hoc pour établir une route optimale lors de l'établissement d'un nouveau lien de communication entre deux noeuds.

L'invention a pour objet un procédé d'établissement de route entre un noeud initial et un noeud terminal dans un réseau ad-hoc comprenant une pluralité de noeuds mobiles, ledit procédé comprenant :
- Une étape de détection, par au moins un premier noeud relais du réseau, d'une information d'appartenance dudit premier noeud relais à au moins un chemin reliant un premier noeud initial et un premier noeud terminal cherchant à établir un lien de communication entre eux, et de distance dudit premier noeud relais au premier noeud initial et/ou au premier noeud terminal,
- Une étape de communication de l'information détectée à au moins un second noeud n'appartenant pas audit au moins un chemin reliant le premier noeud initial et le premier noeud terminal,
- Une étape de sélection d'une route entre un noeud initial et un noeud terminal, ladite étape de sélection étant exécutée par un noeud initial en fonction des informations détectées et communiquées audit noeud initial.

Selon une première variante particulière du procédé selon l'invention, l'étape de détection comprend :
- L'envoi, à tous les noeuds du réseau, d'un message de requête contenant au moins un identifiant d'un premier noeud terminal cherchant à établir un premier lien de communications avec un noeud initial étant à l'origine de l'envoi dudit message de requête,
- A la réception dudit message de requête par un noeud récepteur, la mémorisation d'au moins une information permettant de positionner ledit noeud récepteur dans au moins un chemin reliant ledit premier noeud initial audit premier noeud terminal.

Selon un aspect particulier de la première variante, ledit message de requête contient en outre un identifiant dudit premier noeud initial.

Selon un aspect particulier de la première variante, l'information permettant de positionner ledit noeud récepteur comprend au moins la distance dudit noeud récepteur audit premier noeud initial et un identifiant du noeud voisin précédent ledit noeud récepteur sur un chemin reliant ledit premier noeud initial audit premier noeud terminal.

Selon un aspect particulier de la première variante, l'étape de communication de l'information détectée comprend la transmission par un noeud émetteur, aux noeuds voisins situés sur un chemin possible entre un second noeud initial et un second noeud terminal cherchant à établir un second lien de communications entre eux, d'un message de réponse contenant au moins une information mémorisée par ledit noeud émetteur permettant de positionner ledit noeud émetteur dans un chemin reliant ledit premier noeud initial audit premier noeud terminal.

Selon un aspect particulier de la première variante, le message de réponse contient en outre la distance dudit noeud émetteur audit premier noeud terminal et/ou le noeud voisin précédent ledit noeud émetteur sur un chemin reliant ledit premier noeud terminal audit premier noeud initial et/ou l'identification dudit premier noeud initial et/ou l'identification dudit premier noeud terminal.

Selon un aspect particulier de la première variante, le message de réponse contient en outre une information relative aux contraintes de latence et/ou de débit et/ou de criticité du flux à établir.

Selon un aspect particulier de la première variante, le message de réponse contient en outre une information relative aux capacités de transmission d'au moins un noeud récepteur dudit message de réponse.

Selon un aspect particulier de l'invention, un ensemble de noeuds du réseau transmettent à d'autres noeuds du réseau des informations de topologie et de connexion des noeuds voisins situés à au moins un bond ainsi que des informations d'identifiants de ces noeuds voisins agissants en tant que noeuds initiaux et des informations d'identifiants de noeuds terminaux associés à ces noeuds initiaux par au moins un lien de communication.

Selon une seconde variante de réalisation de l'invention, l'étape de détection comprend :
- L'envoi, à un ensemble de noeuds du réseau, d'un message de requête contenant au moins un identifiant d'un premier noeud initial et d'un premier noeud terminal cherchant à établir un premier lien de communications entre eux,
- A la réception dudit message de requête par un noeud récepteur, l'ajout, dans ledit message de requête, d'au moins une information permettant de positionner ledit noeud récepteur dans le chemin reliant ledit premier noeud initial audit premier noeud terminal.

Selon un aspect particulier de la seconde variante, l'information permettant de positionner ledit noeud récepteur comprend au moins un identifiant dudit noeud récepteur.

Selon un aspect particulier de la seconde variante, l'étape de communication de l'information détectée comprend la transmission par un noeud émetteur, aux noeuds voisins situés sur un chemin possible entre un second noeud initial et un second noeud terminal cherchant à établir un second lien de communications entre eux, d'un message de réponse contenant au moins une information reçue par ledit noeud émetteur à l'issue de la phase de détection, permettant de positionner ledit noeud émetteur dans un chemin reliant ledit premier noeud initial audit premier noeud terminal.

Selon un aspect particulier de la seconde variante, la transmission dudit message de réponse est effectuée de proche en proche pour les noeuds appartenant au chemin de plus courte distance entre ledit second noeud terminal et ledit second noeud initial, la distance d'un chemin étant évaluée en fonction du nombre de noeuds appartenant au chemin et d'une métrique associée à chaque lien inter-noeuds.

Selon un aspect particulier de l'invention, la sélection d'une route est réalisée à l'aide des étapes suivantes :
- Sélection de la route correspondant au chemin le plus court entre le noeud initial et le noeud terminal,
- Lorsque plusieurs chemins équivalents existent, sélection de la route comprenant le moins de noeuds appartenant à plusieurs chemins associés à des liens de communications distincts.

Selon un aspect particulier de l'invention, la sélection d'une route est réalisée à l'aide des étapes suivantes :
- Sélection de la route correspondant au chemin le plus court entre le noeud initial et le noeud terminal,
- Lorsque plusieurs chemins équivalents existent, sélection de la route privilégiant les noeuds appartenant à plusieurs chemins associés à des liens de communications distincts dans le but d'appliquer un mécanisme de codage réseau.

L'invention a encore pour objet un programme d'ordinateur comportant des instructions pour l'exécution du procédé d'établissement de route selon l'invention, lorsque le programme est exécuté par un processeur ainsi qu'un noeud mobile destiné à communiquer avec d'autres noeuds au sein d'un réseau ad-hoc comprenant des moyens configurés pour exécuter le procédé d'établissement de route selon l'invention.

D'autres caractéristiques et avantages de la présente invention apparaîtront mieux à la lecture de la description qui suit en relation aux dessins annexés qui représentent :
- La figure 1, un schéma d'application de la première étape du procédé selon un premier mode de réalisation pour un exemple particulier de topologie d'un réseau ad-hoc,
- La figure 2, un schéma d'application de la seconde étape du procédé selon un premier mode de réalisation pour un exemple particulier de topologie d'un réseau ad-hoc,
- La figure 3, un schéma d'application de la première étape du procédé selon un second mode de réalisation pour un exemple particulier de topologie d'un réseau ad-hoc,
- La figure 4, un schéma d'application de la seconde étape du procédé selon un second mode de réalisation pour un exemple particulier de topologie d'un réseau ad-hoc,
- La figure 5, un premier exemple d'application du procédé selon l'invention à la sélection de routes pour l'établissement d'un flux de communication,
- La figure 6, un second exemple d'application du procédé selon l'invention utilisant un mécanisme de codage réseau

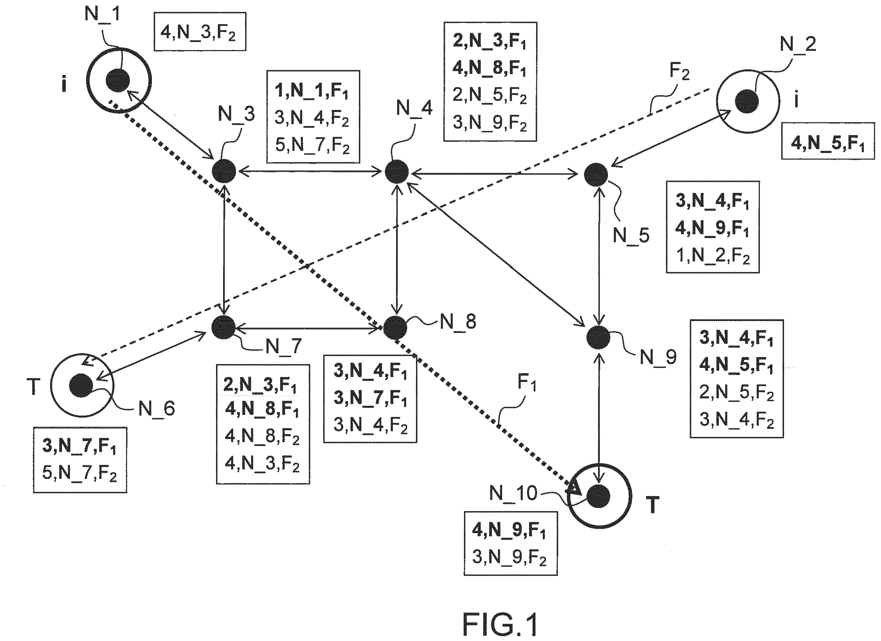

La figure 1 schématise un exemple de réseau ad-hoc comportant dix noeuds mobiles N_1,...N_10. Chaque noeud possède la capacité, via un ou plusieurs moyens d'accès radio, de communiquer avec un ou plusieurs noeuds voisins. Sur la figure 1, les liens de communication possibles sont représentés par des flèches à double sens en traits pleins.

Dans l'exemple de la figure 1, un premier noeud initial N_1 cherche à établir un premier flux de communication F1 avec un premier noeud terminal N_10. Un second noeud initial N_2 cherche à établir un second flux de communication F2 avec un second noeud terminal N_6. L'exemple de la figure 1 est limité à deux flux de communication simultanés mais cet exemple n'est nullement limitatif et peut être étendu à N flux, avec N un entier supérieur ou égal à deux.

Un des objectifs du procédé selon l'invention est de collecter, au niveau des noeuds initiaux des flux N_1 et N_2, des informations sur la topologie du réseau et sur les autres flux afin de pouvoir dans un second temps exploiter ces informations pour déterminer une route entre le noeud initial et le noeud terminal.

A cet effet, l'invention porte tout d'abord sur un procédé de collecte d'informations de routage qui comprend principalement deux étapes.

La première étape du procédé consiste à détecter ou identifier, pour chaque noeud du réseau, son appartenance à un chemin possible par lequel peut transiter un des deux flux de communication F1, F2. Dans cette première étape, on identifie également, pour chaque noeud situé à un bond, sa distance la plus courte, dans le chemin, aux noeuds initiaux et terminaux du flux.

La seconde étape du procédé consiste à communiquer les informations détectées lors de la première phase aux noeuds initiaux N_1, N_2 des flux de communication identifiés.

Le procédé de collecte d'informations de routage selon l'invention peut être mis en oeuvre selon plusieurs variantes de réalisations.

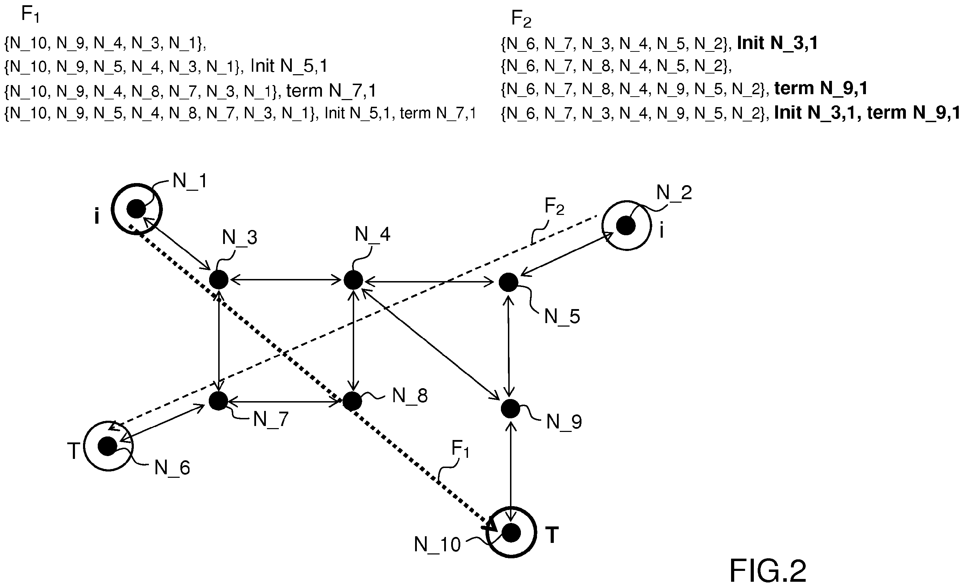

Les figures 1 et 2 illustrent respectivement la mise en oeuvre de la première étape et de la seconde étape du procédé selon un premier mode de réalisation de l'invention.

La première étape du procédé illustrée à la figure 1 consiste, pour chaque noeud initial N_1, N_2 à diffuser un message de requête à tous les noeuds du réseau. Le message généré par le noeud initial contient l'identifiant du noeud initial générateur du message et l'identifiant du noeud terminal qui est la destination avec laquelle le noeud initial cherche à établir un lien de communication. Ce message peut aussi transmettre des informations utilisées dans la décision de sélection des chemins telles que des informations relatives aux contraintes de latence et de débit du flux à établir, des informations concernant l'adaptation possible de ces contraintes ou encore la criticité des flux.

Prenons l'exemple du noeud initial N_1, celui-ci génère un message qui contient au moins l'information du noeud initial N_1 et du noeud terminal N_10 et aussi l'information du noeud émetteur du message qui est ici également le noeud N_1. Alternativement, l'information {noeud initial ; noeud terminal} peut être remplacée par un identifiant du flux de communication F1. Ce message est transmis aux voisins les plus proches (c'est-à-dire situés à un bond) du noeud N_1, il s'agit dans l'exemple de la figure 1 du noeud N_3.

Sur réception de ce message, le noeud N_3 lit le message et en déduit que le noeud émetteur est le noeud N_1 qui est également le noeud initial. Le noeud N_3 est donc à une distance de un bond du noeud initial. Le noeud N_3 mémorise l'identifiant du noeud précédent et sa distance au noeud initial. Le noeud N_3 complète le message reçu avec l'information de distance au noeud initial N_1 (ici égale à 1) puis transmet le message à ses voisins les plus proches qui sont ici N_4 et N_7.

Le noeud N_4 exploite les informations contenues dans le message pour en déduire qu'il est à une distance de deux bonds du noeud initial N_1 avec N_3 le noeud précédent sur le chemin qui relie N_1 à N_4. N_4 génère ensuite un message contenant son identifiant et l'information de distance au noeud initial N_1 et le transmet au noeud suivant.

Ce procédé est itéré de proche en proche pour tous les noeuds. Certains noeuds, comme les noeuds N_7,N_8 et N_4 notamment, reçoivent des messages de plusieurs voisins avec le même identifiant de flux. Ces noeuds mémorisent alors plusieurs jeux d'informations associés au même flux.

La première étape du procédé est exécutée de façon identique pour tous les flux de communication, en l'occurrence pour le flux F2 reliant le noeud initial N_2 au noeud terminal N_6.

A l'issue de cette première étape, chaque noeud du réseau a mémorisé un ou plusieurs couples d'informations {distance au noeud initial, noeud précédent sur le chemin, identifiant du flux de communication} pour un ou plusieurs flux de communication.

La figure 2 illustre la seconde étape du procédé selon le premier mode de réalisation de l'invention.

Dans cette seconde étape, les noeuds terminaux génèrent des messages de réponse qui sont transmis de proche en proche selon tous les chemins reliant un noeud terminal au noeud initial associé au même flux de communication. Au cours de la propagation de ces messages, ces derniers sont enrichis en collectant les informations mémorisées par chaque noeud lors de la première étape du procédé. A l'issue de la seconde étape, les noeuds initiaux N_1,N_2 ont récupéré en mémoire les informations identifiées sur la figure 2 sous forme de tables. En complément de ces informations peuvent être ajoutées des informations spécifiques au flux, notamment les contraintes de débit, latence et criticité, si celles-ci sont utilisées dans les critères de détermination de route par les noeuds initiaux des routes à établir.

Le noeud initial N_1 associé au flux de communication F1 a récupéré la liste des chemins possibles entre le noeud terminal N_10 et le noeud initial N_1. Dans l'exemple de la figure 2, il y a quatre chemins possibles :
C1 : {N_10,N_9,N_4,N_3,N_1}
C2 : {N_10,N_9,N_5,N_4,N_3,N_1}
C3 : {N_10,N_9,N_4,N_8,N_7,N_3,N_1}
C4 : {N_10,N_9, N_5,N_4,N_8,N_7,N_3,N_1}
En outre, pour chaque chemin, il est indiqué si l'un des noeuds du chemin est un noeud initial ou terminal d'un autre flux, par exemple le flux F2, ou si l'un des noeuds du chemin est à une distance de un bond d'un autre flux.
Dans l'exemple de la figure 2, le noeud N_5 dans le chemin C2 et le chemin C4 est à une distance de un bond du noeud initial N_2 du flux F2, ce qui est identifié dans la table mémorisée par le noeud N_1 par l'information « Init N_5, 1 » ce qui signifie que N_5 est à un bond d'un noeud initial d'un autre flux.
Le noeud N_7, dans les chemins C3 et C4, est à une distance de un bond du noeud terminal N_6 du flux F2, ce qui est identifié dans la table mémorisée par le noeud N_1 par l'information « term N_7, 1 ».
Si le noeud initial N_2 ou le noeud terminal N_6 étaient situés sur un chemin possible entre les noeuds N_1 et N_10, ils seraient identifiés comme tels dans la table mémorisée par le noeud initial N_1.
Le même procédé est appliqué au noeud initial N_2 du flux F2 qui mémorise dans une table les informations identifiées sur la figure 2 à savoir les quatre chemins suivants :
D1 : {N_6,N_7,N_3,N_4,N_5,N_2}
D2 : {N_6,N_7,N_8,N_4,N_5,N_2}
D3 : {N_6,N_7,N_8,N_4,N_9,N_5,N_2}
D4 : {N_6,N_7,N_3,N_4,N_9,N_5,N_2}
En outre le noeud N_3 est identifié comme étant situé à un bond du noeud initial N_1 du flux F1 et le noeud N_9 est identifié comme étant situé à un bond du noeud terminal N_9 du flux F1.
A partir des informations mémorisées à l'issue des deux étapes du procédé de collecte d'informations de routage selon l'invention, les noeuds initiaux N_1,N_2 peuvent élaborer des décisions de sélection de chemins non seulement en fonction d'un critère de distance entre le noeud initial et le noeud terminal comme cela est usuellement fait mais également en fonction des chemins potentiellement empruntés par d'autres flux.

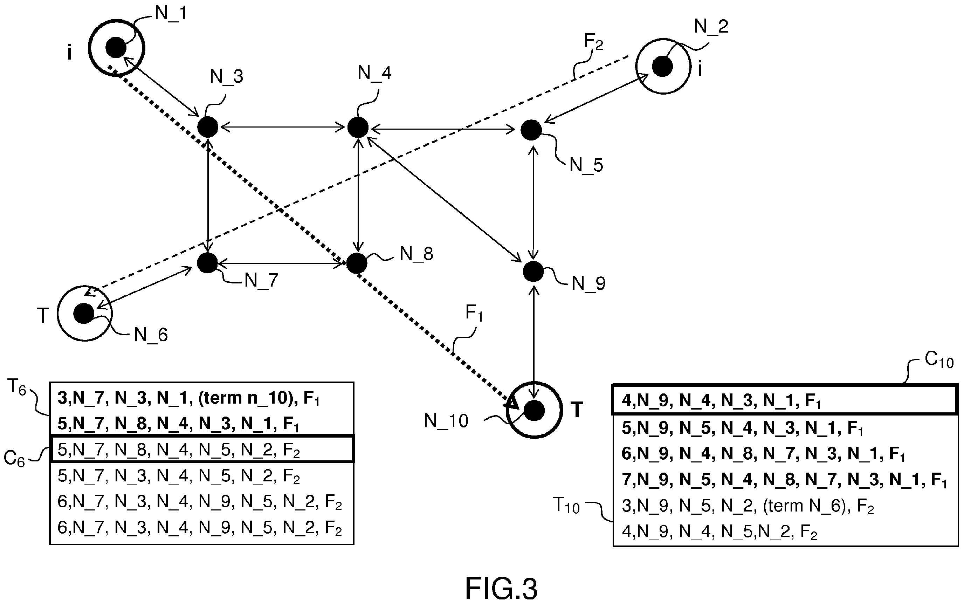

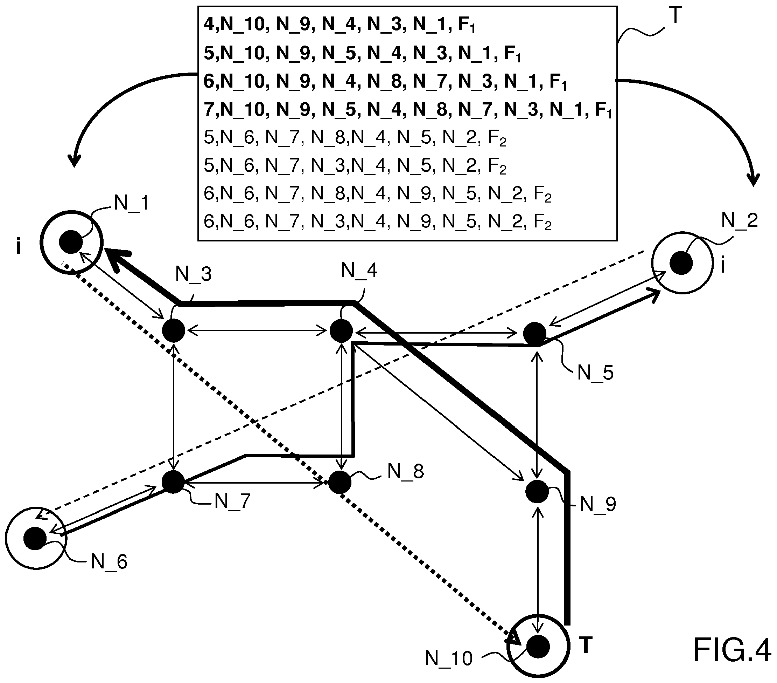

Les figures 3 et 4 illustrent respectivement la mise en oeuvre de la première étape et de la seconde étape du procédé selon un deuxième mode de réalisation de l'invention.

Selon ce deuxième mode de réalisation, la première étape du procédé est similaire à celle du premier mode de réalisation illustré à la figure 1 à la différence prêt que les informations de distance et de noeud voisin ne sont pas mémorisées par chaque noeud mais accumulées dans le message de requête jusqu'à son acheminement vers le noeud terminal. Lorsqu'un noeud terminal reçoit le message de requête, il exploite les informations contenues dans ce message pour construire une table de chemins, pour chaque flux, qui relient ce noeud terminal à chaque noeud initial de chaque flux.

La table T₆ représentée sur la figure 3 contient les informations mémorisées par le noeud terminal N_6 à l'issu de la première étape du procédé. Elle contient, pour chaque entrée, un chemin entre ce noeud terminal N_6 et un noeud initial associé à un flux donné, ainsi que le nombre de noeuds ou bonds nécessaires pour parcourir ce chemin.
Par exemple, une entrée d'une telle table est formatée selon la syntaxe suivante :
{nombre de bonds, identifiants des noeuds du chemin, identifiant du flux}.
Pour les flux autres que celui dont le noeud terminal est destinataire, le noeud terminal du flux est également mémorisé.
A partir de ces informations, le noeud terminal identifie un chemin le plus court C₆,C₁₀ jusqu'au noeud initial.

Dans la deuxième étape du procédé, illustrée à la figure 4, les noeuds terminaux N_6,N_10 génèrent un message de réponse qui est transmis via le chemin le plus court C₆,C₁₀ identifié à l'étape précédente jusqu'aux noeuds initiaux N_1,N_2.
Lorsqu'un noeud intermédiaire, par exemple le noeud N_4, est situé à l'intersection de deux chemins associés à deux flux F1,F2 distincts, il reçoit un message de réponse provenant de deux noeuds terminaux N_6,N_10. Ces deux messages sont alors mutualisés puis la transmission vers les deux noeuds initiaux N_1,N_2 se poursuit. A l'issue de la deuxième étape, les noeuds initiaux N_1,N_2 peuvent récupérer chacun les informations mémorisées par les noeuds terminaux N_6,N_10.
Ces informations sont illustrées sur la figure 4 par la table T.

Les deux modes de réalisation de l'invention décrits ci-dessus sont applicables dans le cadre de la mise en oeuvre d'une politique de routage réactif. Le procédé selon l'invention est initié par un noeud initial qui souhaite établir un lien de communication avec un noeud terminal. A l'issue de l'exécution des deux étapes du procédé, ce noeud initial récupère un ensemble d'informations, à la fois sur la topologie du réseau lui permettant de connaitre les chemins possibles pour accéder au noeud terminal visé, mais également sur les flux de communication déjà établis au sein du réseau et sur les chemins potentiels par lesquels peuvent passer ces flux.
Une fois ces informations collectées par le noeud initial, elles sont exploitées pour déterminer un choix de route vers le noeud terminal et appliquer un algorithme de routage.

Selon un troisième mode de réalisation, le procédé selon l'invention peut également être appliqué pour une politique de routage proactif. Dans le cas des routages proactifs, chaque noeud du réseau a la connaissance de la topologie du réseau avant une demande d'établissement de liens. Cette connaissance de la topologie s'obtient par la transmission de messages de contrôle dans le réseau transmettant des informations partielles de topologie. Chaque noeud met à jour sa table de routage à la réception de ces messages.

Dans ce troisième mode de réalisation, le procédé est appliqué non pas au niveau d'un noeud initial cherchant à établir un lien de communication mais au niveau de noeuds quelconques du réseau qui transmettent à leurs voisins régulièrement des messages de contrôle contenant des informations de topologie.
Lorsqu'un ou plusieurs flux de communication est déjà établi, les noeuds situés sur un chemin traversé par ces flux complètent les messages de contrôle avec des informations de positionnement du noeud par rapport au noeud initial ou au noeud terminal du flux considéré. Par exemple, un noeud peut indiquer qu'il est un noeud initial ou un noeud terminal ou qu'il est situé à un bond d'un noeud initial ou d'un noeud terminal.

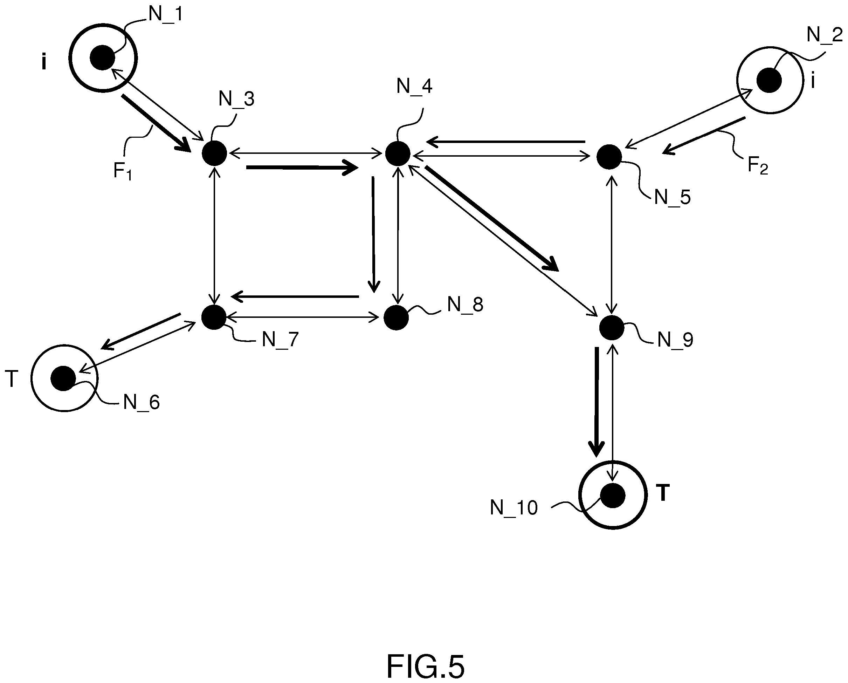

La figure 5 illustre, sur un exemple particulier de topologie d'un réseau ad-hoc, une application possible de l'invention pour la détermination de routes en vue de l'établissement de flux de communications.

Le critère de sélection de route utilisé pour l'exemple de la figure 5 est le suivant :
- En premier lieu, choisir le chemin le plus court pour atteindre le noeud terminal, autrement dit le chemin comportant le moins de bonds,
- En second lieu, si plusieurs chemins présentent le même nombre de bonds, choisir celui qui comporte le moins de noeuds pouvant émettre des données issues d'un autre flux.

Le critère de sélection consiste, autrement dit, à identifier, à partir des informations collectées par les noeuds initiaux, les noeuds relais qui se trouvent à l'intersection de plusieurs flux pour les éviter ou minimiser leur nombre dans la sélection du chemin.

Dans l'exemple de la figure 5, il n'existe qu'un seul chemin le plus court pour relier le noeud initial N_1 au noeud terminal N_10 (flux F1). Le chemin choisi est donc le chemin {N_3, N_4, N_9}.

Par contre, pour relier le noeud initial N_2 au noeud terminal N_6 (flux F2), il existe deux chemins de même longueur, le premier chemin est {N_5, N_4, N_3, N_7}, le second chemin est {N_5, N_4, N_8, N_7}.

Grâce aux informations collectées, le noeud initial N_2 du flux F2 sait que le noeud N_3 appartient au chemin de traversée du flux F1. A partir de cette information, le noeud initial N_2 sélectionne plutôt le second chemin, celui passant par le noeud N_8 qui n'appartient pas à un chemin de traversée du flux F1.

En choisissant ce critère de sélection de route, on évite de surcharger certains liens de communications, ici le lien entre les noeuds N_3 et N_4, en les allouant à plusieurs flux alors qu'il est possible de faire en sorte que les différents flux de communication traversant simultanément le réseau passent par des chemins dissociés ou dont l'intersection est la plus petite possible.

Un avantage de cette solution est qu'elle permet de tirer profit des ressources globales du réseau sans surcharger localement un lien ce qui pourrait engendrer une augmentation du délai de transmission sur ce lien.

L'exemple de la figure 5 est bien entendu non limitatif et l'invention procure des avantages d'autant plus importants que le nombre de flux de communication simultanés est grand.

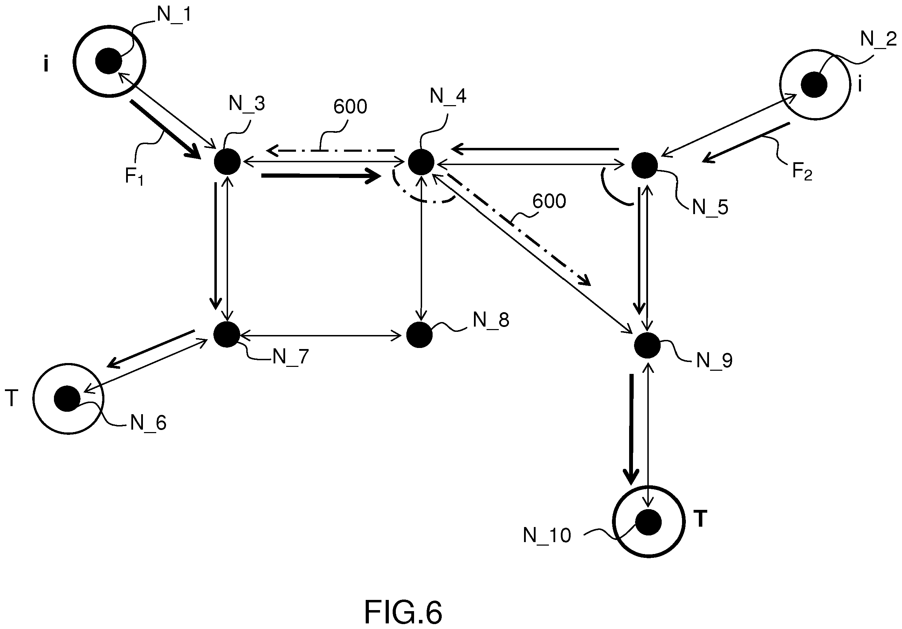

La figure 6 illustre, sur le même exemple de topologie réseau que la figure 5, une autre application de l'invention.

On suppose dans cette application que les noeuds du réseau ont la capacité de pouvoir appliquer un mécanisme de codage réseau.

Le choix d'une route est alors fait en tirant avantage de cette capacité et de la connaissance des noeuds situés à l'intersection de plusieurs flux.

Dans l'exemple de la figure 6, le noeud N_4 qui reçoit des paquets à la fois du flux F1 et du flux F2 peut combiner les paquets de ces deux flux, par exemple par une opération XOR. Le paquet résultant 600 de cette combinaison est transmis aux noeuds N_3 et N_9. Le noeud N_9 reçoit un paquet du flux F2 en provenance du noeud N_5 et en combinant ce paquet avec le paquet 600 reçu du noeud N_4, il peut récupérer le paquet du flux F1 et l'acheminer jusqu'à sa destination. De même, le noeud N_3 peut combiner le paquet 600 avec un paquet du flux F1 pour obtenir un paquet du flux F2 qui est transmis au noeud N_7 puis jusqu'à sa destination finale qui est le noeuds N_6.

En résumé, l'invention permet, par la collecte d'informations sur l'appartenance des noeuds du réseau à des chemins de traversée de différents flux de communication, de détecter les noeuds situés à l'intersection de plusieurs chemins qui peuvent mettre en oeuvre un mécanisme de codage réseau pour optimiser le débit global des flux transmis.

Dans une variante de réalisation de l'invention, les messages transmis lors de la seconde étape du procédé relative à la remontée d'informations collectées vers les noeuds initiaux peuvent contenir également une information sur la capacité de certains noeuds à posséder plusieurs équipements d'accès radio par exemple un accès par réseau cellulaire et un accès par Wifi.

Le procédé selon l'invention est exécuté par un ou plusieurs noeuds d'un réseau ad-hoc. Un noeud est constitué par un terminal ayant la capacité de communiquer avec d'autres noeuds via une ou plusieurs technologies d'accès radio. Dans ce contexte, le procédé selon l'invention peut être implémenté sur un noeud par le biais d'éléments matériels et/ou logiciels. Le dispositif embarqué dans un noeud du réseau et configuré pour mettre en oeuvre l'invention peut notamment comprendre un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le dispositif peut utiliser un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Le procédé selon l'invention peut être mis en oeuvre en tant que programme d'ordinateur comportant des instructions pour son exécution. Le programme d'ordinateur peut être enregistré sur un support d'enregistrement lisible par un processeur. Le support peut être électronique, magnétique, optique ou électromagnétique.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués (*"Cloud computing*"), éventuellement selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

## Revendications

1. Procédé d'établissement de route entre un noeud initial et un noeud terminal dans un réseau ad-hoc comprenant une pluralité de noeuds mobiles, ledit procédé comprenant :
- Une étape de détection, par au moins un premier noeud relais du réseau (N_4), d'une information d'appartenance dudit premier noeud relais (N_4) à au moins un chemin reliant un premier noeud initial (N_1) et un premier noeud terminal (N_10) cherchant à établir un lien de communication entre eux, et de distance dudit premier noeud (N_4) relais au premier noeud initial (N_1) et/ou au premier noeud terminal (N_10),
- Une étape de communication de l'information détectée à au moins un second noeud initial (N_2) n'appartenant pas audit au moins un chemin reliant le premier noeud initial (N_1) et le premier noeud terminal (N_10),
- Une étape de sélection d'une route entre le second noeud initial (N_2) et un second noeud terminal (N_6), ladite étape de sélection étant exécutée par un noeud initial en fonction des informations détectées et communiquées audit noeud initial.

2. Procédé d'établissement de route entre un noeud initial et un noeud terminal selon la revendication 1 dans lequel l'étape de détection comprend :
- L'envoi, à tous les noeuds du réseau, d'un message de requête contenant au moins un identifiant d'un premier noeud terminal (N_10) cherchant à établir un premier lien de communications (F1) avec un noeud initial (N_1) étant à l'origine de l'envoi dudit message de requête,
- A la réception dudit message de requête par un noeud récepteur (N_4), la mémorisation d'au moins une information permettant de positionner ledit noeud récepteur (N_4) dans au moins un chemin reliant ledit premier noeud initial (N_1) audit premier noeud terminal (N_10).

3. Procédé d'établissement de route entre un noeud initial et un noeud terminal selon la revendication 2 dans lequel ledit message de requête contient en outre un identifiant dudit premier noeud initial (N_1).

4. Procédé d'établissement de route entre un noeud initial et un noeud terminal selon l'une des revendications 2 ou 3 dans lequel l'information permettant de positionner ledit noeud récepteur (N_4) comprend au moins la distance dudit noeud récepteur (N_4) audit premier noeud initial (N_1) et un identifiant du noeud voisin (N_3) précédent ledit noeud récepteur (N_4) sur un chemin reliant ledit premier noeud initial (N_1) audit premier noeud terminal (N_10).

5. Procédé d'établissement de route entre un noeud initial et un noeud terminal selon l'une des revendications 2,3 ou 4 dans lequel l'étape de communication de l'information détectée comprend la transmission par un noeud émetteur (N_4), aux noeuds voisins situés sur un chemin possible entre le second noeud initial (N_2) et le second noeud terminal (N_6) cherchant à établir un second lien de communications (F2) entre eux, d'un message de réponse contenant au moins une information mémorisée par ledit noeud émetteur (N_4) permettant de positionner ledit noeud émetteur (N_4) dans un chemin reliant ledit premier noeud initial (N_1) audit premier noeud terminal (N_10).

6. Procédé d'établissement de route entre un noeud initial et un noeud terminal selon la revendication 5 dans lequel le message de réponse contient en outre la distance dudit noeud émetteur (N_4) audit premier noeud terminal (N_10) et/ou le noeud voisin (N_8) précédent ledit noeud émetteur (N_4) sur un chemin reliant ledit premier noeud terminal (N_10) audit premier noeud initial (N_1) et/ou l'identification dudit premier noeud initial (N_1) et/ou l'identification dudit premier noeud terminal (N_10).

7. Procédé d'établissement de route entre un noeud initial et un noeud terminal selon la revendication 6 dans lequel le message de réponse contient en outre une information relative aux contraintes de latence et/ou de débit et/ou de criticité du flux à établir.

8. Procédé d'établissement de route entre un noeud initial et un noeud terminal selon l'une des revendications 6 ou 7 dans lequel le message de réponse contient en outre une information relative aux capacités de transmission d'au moins un noeud récepteur dudit message de réponse.

9. Procédé d'établissement de route entre un noeud initial et un noeud terminal selon la revendication 1 dans laquelle un ensemble de noeuds du réseau transmettent à d'autres noeuds du réseau des informations de topologie et de connexion des noeuds voisins situés à au moins un bond ainsi que des informations d'identifiants de ces noeuds voisins agissants en tant que noeuds initiaux et des informations d'identifiants de noeuds terminaux associés à ces noeuds initiaux par au moins un lien de communication.

10. Procédé d'établissement de route entre un noeud initial et un noeud terminal selon la revendication 1 dans lequel l'étape de détection comprend :
- L'envoi, à un ensemble de noeuds du réseau, d'un message de requête contenant au moins un identifiant d'un premier noeud initial (N_1) et d'un premier noeud terminal (N_10) cherchant à établir un premier lien de communications entre eux,
- A la réception dudit message de requête par un noeud récepteur (N_4), l'ajout, dans ledit message de requête, d'au moins une information permettant de positionner ledit noeud récepteur (N_4) dans le chemin reliant ledit premier noeud initial (N_1) audit premier noeud terminal (N_10).

11. Procédé d'établissement de route entre un noeud initial et un noeud terminal selon la revendication 10 dans lequel l'information permettant de positionner ledit noeud récepteur (N_4) comprend au moins un identifiant dudit noeuds récepteur (N_4).

12. Procédé d'établissement de route entre un noeud initial et un noeud terminal selon l'une des revendications 10 ou 11 dans lequel l'étape de communication de l'information détectée comprend la transmission par un noeud émetteur (N_4,N_10), aux noeuds voisins situés sur un chemin possible entre le second noeud initial (N_2) et le second noeud terminal (N_6) cherchant à établir un second lien de communications (F2) entre eux, d'un message de réponse contenant au moins une information reçue par ledit noeud émetteur (N_4) à l'issue de la phase de détection, permettant de positionner ledit noeud émetteur (N_4) dans un chemin reliant ledit premier noeud initial (N_1) audit premier noeud terminal (N_10).

13. Procédé d'établissement de route entre un noeud initial et un noeud terminal selon la revendication 12 dans lequel la transmission dudit message de réponse est effectuée de proche en proche pour les noeuds appartenant au chemin de plus courte distance entre ledit second noeud terminal (N_6) et ledit second noeud initial (N_2), la distance d'un chemin étant évaluée en fonction du nombre de noeuds appartenant au chemin et d'une métrique associée à chaque lien inter-noeuds.

14. Procédé d'établissement de route selon l'une des revendications précédentes dans lequel la sélection d'une route est réalisée à l'aide des étapes suivantes :
- Sélection de la route correspondant au chemin le plus court entre le noeud initial et le noeud terminal,
- Lorsque plusieurs chemins équivalents existent, sélection de la route comprenant le moins de noeuds appartenant à plusieurs chemins associés à des liens de communications distincts.

15. Procédé d'établissement de route selon l'une des revendications précédentes dans lequel la sélection d'une route est réalisée à l'aide des étapes suivantes :
- Sélection de la route correspondant au chemin le plus court entre le noeud initial et le noeud terminal,
- Lorsque plusieurs chemins équivalents existent, sélection de la route privilégiant les noeuds appartenant à plusieurs chemins associés à des liens de communications distincts dans le but d'appliquer un mécanisme de codage réseau.

16. Programme d'ordinateur comportant des instructions pour l'exécution de chacune des étapes du procédé d'établissement de route selon l'une quelconque des revendications 1 à 15, lorsque le programme est exécuté par un processeur.

17. Noeud mobile destiné à communiquer avec d'autres noeuds au sein d'un réseau ad-hoc comprenant des moyens configurés pour exécuter chacune des étapes du procédé d'établissement de route selon l'une quelconque des revendications 1 à 15.

## Patentansprüche

1. Verfahren zum Einrichten eines Leitwegs zwischen einem Anfangsknoten und einem Endknoten in einem Adhoc-Netzwerk, das mehrere mobile Knoten enthält, wobei das Verfahren Folgendes beinhaltet:
- einen Schritt des Erkennens, durch wenigstens einen Relais-Knoten des Netzwerks (N_4), einer Zugehörigkeitsinformation des ersten Relais-Knotens (N_4) zu wenigstens einem Weg, der einen ersten Anfangsknoten (N_1) und einen ersten Endknoten (N_10) verbindet, der eine Kommunikationsverbindung zwischen ihnen herzustellen versucht, und einer Distanz zwischen dem ersten Relais-Knoten (N_4) und dem ersten Anfangsknoten (N_1) und/oder dem ersten Endknoten (N_10),
- einen Schritt des Übermittelns der erkannten Information zu wenigstens einem zweiten Anfangsknoten (N_2), der nicht zu dem wenigstens einen Weg gehört, der den ersten Anfangsknoten (N_1) und den ersten Endknoten (N_10) verbindet,
- einen Schritt des Auswählens eines Leitwegs zwischen dem zweiten Anfangsknoten (N_2) und einem zweiten Endknoten (N_6), wobei der Schritt des Auswählens durch einen Anfangsknoten in Abhängigkeit von den erkannten und zu dem Anfangsknoten übermittelten Informationen ausgeführt wird.

2. Verfahren zum Einrichten eines Leitwegs zwischen einem Anfangsknoten und einem Endknoten nach Anspruch 1, wobei der Schritt des Erkennens Folgendes beinhaltet:
- Senden, zu allen Knoten des Netzwerks, einer Anforderungsnachricht, die wenigstens einen Identifikator eines ersten Endknotens (N_10) enthält, der eine erste Kommunikationsverbindung (F1) mit einem Anfangsknoten (N_1) am Ursprung des Sendens der Anforderungsnachricht einzurichten versucht,
- Speichern, nach dem Empfang der Anforderungsnachricht durch einen Empfängerknoten (N_4), von wenigstens einer Information, die das Positionieren des Empfangsknotens (N_4) in wenigstens einem Weg zulässt, der den ersten Anfangsknoten (N_1) mit dem ersten Endknoten (N_10) verbindet.

3. Verfahren zum Einrichten eines Leitwegs zwischen einem Anfangsknoten und einem Endknoten nach Anspruch 2, bei dem die Anforderungsnachricht ferner einen Identifikator des ersten Anfangsknotens (N_1) enthält.

4. Verfahren zum Einrichten eines Leitwegs zwischen einem Anfangsknoten und einem Endknoten nach Anspruch 2 oder 3, bei dem die Information, die das Positionieren des Empfangsknotens (N_4) zulässt, wenigstens die Distanz zwischen dem Empfangsknoten (N_4) und dem ersten Anfangsknoten (N_1) und einen Identifikator des Nachbarknotens (N_3) vor dem Empfangsknoten (N_4) auf einem Weg umfasst, der den ersten Anfangsknoten (N_1) mit dem ersten Endknoten (N_10) verbindet.

5. Verfahren zum Einrichten eines Leitwegs zwischen einem Anfangsknoten und einem Endknoten nach Anspruch 2, 3 oder 4, bei dem der Schritt des Übermittelns der erkannten Information das Übertragen, durch einen Sendeknoten (N_4) zu den Nachbarknoten, die sich auf einem möglichen Weg zwischen dem zweiten Anfangsknoten (N_2) und dem zweiten Endknoten (N_6) befinden, der eine zweite Kommunikationsverbindung (F2) zwischen ihnen herzustellen versucht, einer Antwortnachricht beinhaltet, die wenigstens eine von dem Sendeknoten (N_4) gespeicherte Information enthält, die das Positionieren des Sendeknotens (N_4) auf einem Weg zulässt, der den ersten Anfangsknoten (N_1) mit dem ersten Endknoten (N_10) verbindet.

6. Verfahren zum Einrichten eines Leitwegs zwischen einem Anfangsknoten und einem Endknoten nach Anspruch 5, bei dem die Antwortnachricht ferner die Distanz zwischen dem Sendeknoten (N_4) und dem ersten Endknoten (N_10) und/oder dem Nachbarknoten (N_8) vor dem Sendeknoten (N_4) auf einem Weg enthält, der den ersten Endknoten (N_10) mit dem ersten Anfangsknoten (N_1) verbindet, und/oder die Identifikation des ersten Anfangsknotens (N_1) und/oder die Identifikation des ersten Endknotens (N_10).

7. Verfahren zum Einrichten eines Leitwegs zwischen einem Anfangsknoten und einem Endknoten nach Anspruch 6, bei dem die Antwortnachricht ferner eine Information über Latenz- und/oder Durchsatz- und/oder Kritikalitätsbeschränkungen des einzurichtenden Flusses enthält.

8. Verfahren zum Einrichten eines Leitwegs zwischen einem Anfangsknoten und einem Endknoten nach Anspruch 6 oder 7, bei dem die Antwortnachricht ferner eine Information über die Übertragungskapazitäten von wenigstens einem Empfangsknoten der Antwortnachricht enthält.

9. Verfahren zum Einrichten eines Leitwegs zwischen einem Anfangsknoten und einem Endknoten nach Anspruch 1, bei dem eine Gruppe von Knoten des Netzwerks zu anderen Knoten des Netzwerks Topologie- und Verbindungsinformationen von benachbarten Knoten, die sich auf wenigstens einem Sprung befinden, sowie Identifikationsinformationen dieser Nachbarknoten, die als Anfangsknoten wirken, und Identifikationsinformationen von Endknoten überträgt, die mit diesen Anfangsknoten durch wenigstens eine Kommunikationsverbindung assoziiert sind.

10. Verfahren zum Einrichten eines Leitwegs zwischen einem Anfangsknoten und einem Endknoten nach Anspruch 1, bei dem der Erkennungsschritt Folgendes beinhaltet:
- Senden, zu einer Gruppe von Knoten des Netzwerks, einer Anforderungsnachricht, die wenigstens einen Identifikator eines ersten Anfangsknotens (N_1) und eines ersten Endknotens (N_10) enthält, der eine erste Kommunikationsverbindung dazwischen einzurichten versucht,
- Hinzufügen in der Anforderungsnachricht, nach dem Empfang der Anforderungsnachricht durch einen Empfangsknoten (N_4), von wenigstens einer Information, die das Positionieren des Empfangsknotens (N_4) auf dem Weg zulässt, der den ersten Anfangsknoten (N_1) mit dem ersten Endknoten (N_10) verbindet.

11. Verfahren zum Einrichten eines Leitwegs zwischen einem Anfangsknoten und einem Endknoten nach Anspruch 10, bei dem die Information, die das Positionieren des Empfangsknotens (N_4) zulässt, wenigstens einen Identifikator des Empfangsknotens (N_4) umfasst.

12. Verfahren zum Einrichten eines Leitwegs zwischen einem Anfangsknoten und einem Endknoten nach Anspruch 10 oder 11, bei dem der Schritt des Übermittelns der erkannten Information das Übertragen, durch einen Sendeknoten (N_4, N_10) zu den Nachbarknoten, die sich auf einem möglichen Weg zwischen dem zweiten Anfangsknoten (N_2) und dem zweiten Endknoten (N_6) befinden, der eine zweite Kommunikationsverbindung (F2) zwischen ihnen einzurichten versucht, einer Antwortnachricht beinhaltet, die wenigstens eine Information enthält, die vom Sendeknoten (N_4) am Ende der Erkennungsphase empfangen wird, die das Positionieren des Senderknotens (N_4) auf einem Weg zulässt, der den ersten Anfangsknoten (N_1) mit dem ersten Endknoten (N_10) verbindet.

13. Verfahren zum Einrichten eines Leitwegs zwischen einem Anfangsknoten und einem Endknoten nach Anspruch 12, bei dem das Übertragen der Antwortnachricht schrittweise für die Knoten erfolgt, die zu dem Weg mit der kürzesten Distanz zwischen dem zweiten Endknoten (N_6) und dem zweiten Anfangsknoten (N_2) gehören, wobei die Distanz eines Wegs in Abhängigkeit von der Anzahl von zu dem Weg gehörenden Knoten und von einer mit jeder Zwischenknotenverbindung assoziierten Metrik beurteilt wird.

14. Verfahren zum Einrichten eines Leitwegs nach einem der vorherigen Ansprüche, bei dem das Auswählen eines Leitwegs mit Hilfe der folgenden Schritte erfolgt:
- Auswählen des Leitwegs, der dem kürzesten Weg zwischen dem Anfangsknoten und dem Endknoten entspricht,
- wenn es mehrere äquivalente Wege gibt, Auswählen des Leitwegs, der die wenigsten Knoten umfasst, die zu mehreren Wegen gehören, die mit verschiedenen Kommunikationsverbindungen assoziiert sind.

15. Verfahren zum Einrichten eines Leitwegs nach einem der vorherigen Ansprüche, bei dem das Auswählen eines Leitwegs mit Hilfe der folgenden Schritte erfolgt:
- Auswählen des Leitwegs, der dem kürzesten Weg zwischen dem Anfangsknoten und dem Endknoten entspricht,
- wenn es mehrere äquivalente Wege gibt, Auswählen des Leitwegs, der die Knoten privilegiert, die zu mehreren Wegen gehören, die mit verschiedenen Kommunikationsverbindungen assoziiert sind, mit dem Ziel, einen Netzwerkcodierungsmechanismus anzuwenden.

16. Computerprogramm, das Befehle zum Ausführen jedes der Schritte des Verfahrens zum Einrichten eines Leitwegs nach einem der Ansprüche 1 bis 15 umfasst, wenn das Programm von einem Prozessor ausgeführt wird.

17. Mobiler Knoten zum Kommunizieren mit anderen Knoten im Innern eines Adhoc-Netzwerks, umfassend Mittel, die zum Ausführen jedes der Schritte des Verfahrens zum Einrichten des Leitwegs nach einem der Ansprüche 1 bis 15 konfiguriert sind.

## Claims

1. A method for establishing a route between an initial node and a terminal node in an ad-hoc network comprising a plurality of mobile nodes, said method comprising:
- a step of detection, by at least one first relay node of the network (N_4), of an information item concerning the belonging of said first relay node (N_4) to at least one path linking a first initial node (N_1) and a first terminal node (N_10) seeking to establish a communication link between them, and concerning the distance from said first relay node (N_4) to the first initial node (N-1) and/or to the first terminal node (N_10),
- a step of communication of the detected information item to at least one second initial node (N_2) not belonging to said at least one path linking the first initial node (N-1) and the first terminal node (N-10),
- a step of selection of a route between the second initial node (N-2) and a second terminal node (N_6), said selection step being executed by an initial node as a function of the information detected and communicated to said initial node.

2. The method for establishing a route between an initial node and a terminal node according to Claim 1, in which the detection step comprises:
- the sending, to all the nodes of the network, of a request message containing at least one identifier of a first terminal node (N_10) seeking to establish a first communications link (F1) with an initial node (N_1) involved in the sending of said request message,
- on the reception of said request message by a receiving node (N_4), the storage of at least one information item making it possible to position said receiving node (N_4) in at least one path linking said first initial node (N_1) to said first terminal node (N_10).

3. The method for establishing a route between an initial node and a terminal node according to Claim 2, in which said request message further contains an identifier of said first initial node (N_1).

4. The method for establishing a route between an initial node and a terminal node according to either of Claims 2 or 3, in which the information item making it possible to position said receiving node (N_4) comprises at least the distance from said receiving node (N_4) to said first initial node (N_1) and an identifier of the neighbouring node (N_3) preceding said receiving node (N_4) on a path linking said first initial node (N_1) to said first terminal node (N_10).

5. The method for establishing a route between an initial node and a terminal node according to any of Claims 2, 3 or 4, in which the step of communication of the detected information item comprises the transmission, by a transmitting node (N_4), to the neighbouring nodes situated on a possible path between the second initial node (N_2) and the second terminal node (N_6) seeking to establish a second communications link (F2) between them, of a response message containing at least one information item stored by said transmitting node (N_4) making it possible to position said transmitting node (N_4) in a path linking said first initial node (N_1) to said first terminal node (N_10).

6. The method for establishing a route between an initial node and a terminal node according to Claim 5, in which the response message further contains the distance from said transmitting node (N_4) to said first terminal node (N_10) and/or the neighbouring node (N_8) preceding said transmitting node (N_4) on a path linking said first terminal node (N_10) to said first initial node (N_1) and/or the identification of said first initial node (N_1) and/or the identification of said first terminal node (N_10).

7. The method for establishing a route between an initial node and a terminal node according to Claim 6, in which the response message further contains an information item relating to the constraints of latency and/or of bit rate and/or of criticality of the flow to be established.

8. The method for establishing a route between an initial node and a terminal node according to either of Claims 6 or 7, in which the response message further contains an information item relating to the transmission capacities of at least one receiving node of said response message.

9. The method for establishing a route between an initial node and a terminal node according to Claim 1, in which a set of nodes of the network transmit to other nodes of the network information on topology and connection of the neighbouring nodes situated at at least one hop and ID information of these neighbouring nodes acting as initial nodes and ID information of terminal nodes associated with these initial nodes by at least one communication link.

10. The method for establishing a route between an initial node and a terminal node according to Claim 1, in which the detection step comprises:
- the sending, to a set of nodes of the network, of a request message containing at least one identifier of a first initial node (N_1) and of a first terminal node (N_10) seeking to establish a first communications link between them,
- upon reception of said request message by a receiving node (N_4), the addition, in said request message, of at least one information item making it possible to position said receiving node (N_4) in the path linking said first initial node (N_1) to said first terminal node (N_10).

11. The method for establishing a route between an initial node and a terminal node according to Claim 10, in which the information item making it possible to position said receiving node (N_4) comprises at least one identifier of said receiving node (N_4).

12. The method for establishing a route between an initial node and a terminal node according to either of Claims 10 or 11, in which the step of communication of the detected information item comprises the transmission by a transmitting node (N_4, N_10), to the neighbouring nodes situated on a possible path between the second initial node (N_2) and the second terminal node (N_6) seeking to establish a second communications link (F2) between them, of a response message containing at least one information item received by said transmitting node (N_4) at the end of the detection phase, making it possible to position said transmitting node (N_4) in a path linking said first initial node (N_1) to said first terminal node (N_10).

13. The method for establishing a route between an initial node and a terminal node according to Claim 12, in which the transmission of said response message is performed step by step for the nodes belonging to the path of shortest distance between said second terminal node (N_6) and said second initial node (N_2), the distance of a path being evaluated as a function of the number of nodes belonging to the path and of a metric associated with each inter-node link.

14. The method for establishing a route according to any of the preceding claims, in which the selection of a route is performed using the following steps:
- selection of the route corresponding to the shortest path between the initial node and the terminal node,
- when there are a number of equivalent paths available, selection of the route comprising the fewest nodes belonging to several paths associated with distinct communications links.

15. The method for establishing a route according to any of the preceding claims, in which the selection of a route is performed using the following steps:
- selection of the route corresponding to the shortest path between the initial node and the terminal node,
- when there are a number of equivalent paths available, selection of the route prioritizing the nodes belonging to several paths associated with distinct communications links in order to apply a network coding mechanism.

16. A computer program comprising instructions for the execution of each of the steps of the route establishment method according to any of Claims 1 to 15, when the program is executed by a processor.

17. A mobile node intended to communicate with other nodes within an ad-hoc network comprising means configured to execute each of the steps of the route establishment method according to any of Claims 1 to 15.
